(19)

Europäisches
Patentamt
European
Patent Office
Office européen
des brevets

(11) **EP 4 755 635 A1**

(12) **EUROPEAN PATENT APPLICATION**

(43) Date of publication:
**10.06.2026  Bulletin 2026/24**

(21) Application number: **25220085.2**

(22) Date of filing: **02.12.2025**

(51) International Patent Classification (IPC):
**B33Y 10/00** [(2015.01)]    **B33Y 80/00** [(2015.01)]
**G01N 29/04** [(2006.01)]    **G01N 29/11** [(2006.01)]
**G01N 29/265** [(2006.01)]

(52) Cooperative Patent Classification (CPC):
**B33Y 10/00; B33Y 80/00; G01N 29/043;
G01N 29/11; G01N 29/265;** G01N 2291/044

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **04.12.2024  JP 2024211150**

(71) Applicant: **Hitachi GE Vernova Nuclear Energy,
Ltd.
Hitachi-shi, Ibaraki 317-0073 (JP)**

(72) Inventors:
• **MIKI, Masahiro
Tokyo, 100-8280 (JP)**
• **KITO, Kazuaki
Ibaraki, 317-0073 (JP)**
• **SUGITANI, Yuji
Ibaraki, 317-0073 (JP)**
• **TAKAZAWA, Hidekazu
Tokyo, 100-8280 (JP)**

(74) Representative: **MERH-IP Matias Erny Reichl
Hoffmann
Patentanwälte PartG mbB
Paul-Heyse-Straße 29
80336 München (DE)**

(54) **MANUFACTURING METHOD OF CAST STEEL PRODUCT AND MANUFACTURING METHOD
OF LAMINATED STRUCTURE**

(57)     In the present disclosure, a manufacturing method of a cast steel product formed by casting and having an internal space, includes: inserting, in a state where a liquid is stored in at least a portion of the internal space, an arm having an ultrasonic probe into the internal space; emitting an ultrasonic wave from the ultrasonic probe toward an inner wall surface of the cast steel product via the liquid and detecting an echo of the ultrasonic wave; and determining presence or absence of a defect in the cast steel product on the basis of the echo. Thus, it is possible to facilitate an inspection and repair of the cast steel product or the like at a manufacturing stage and obtain a finished product in a short time.

FIG. 1

EP 4 755 635 A1

## Description

BACKGROUND OF THE INVENTION:

(Field of the Invention)

This invention relates to a manufacturing method of a cast steel product and a manufacturing method of a laminated structure.

(Description of Related Art)

A valve box has a complicated shape, the valve box being a casing of a valve connected to plant piping to adjust a flow rate. Accordingly, the valve box is manufactured by a low-cost casting. A quality of the valve box is guaranteed by a visual inspection of inner and outer surfaces thereof and a pressure test. In the future, when a component such as the valve box is applied to an isolation value, which is key equipment in an important facility, e.g., a nuclear power plant or the like, a high strength is required thereof. In particular, for a special isolation valve required to have a strength equal to that of a nuclear reactor pressure vessel (RPV), a high-priced forged product has been used thus far but, as long as performance equal to that of the forged product can be guaranteed, a valve box made of cast steel may possibly be applicable.

Patent Literature 1 (Japanese Patent Application Publication No. 2004-144489) discloses a method of determining the quality of a cast product having a composite member formed by casting a molten aluminum alloy into a preform set in a mold, in which, using the echo of an ultrasonic wave emitted from an ultrasonic probe, noise or the like in the composite member is measured, and the quality of a cast product is determined.

Patent Literature 2 (Japanese Patent Application Publication No. 2009-66656) discloses a manufacturing method of a continuously cast slab including a step of detecting a defect in a surface layer portion of the cast slab by using a defect detection device, in which the defect detection device includes an ultrasonic device for defect detection that performs an ultrasonic defect detection of a defect in the cast slab, a shot blasting is performed on the entire surface of the cast slab to remove a scale from a surface of the case slab, and the surface of the cast slab is inspected by a water immersion method with the defect detection device of the ultrasonic defect detection type.

SUMMARY OF THE INVENTION:

The cast product as a target object to which the method described in Patent Literature 1 is to be applied is not shaped like a container, and therefore an inspection from an internal space of the cast product is not required.

Meanwhile, in the method described in Patent Literature 2, the target object is the continuously cast slab that does not have a complicated shape, and does not have an internal space, or the like.

Even when a valve box made of cast steel or the like is manufactured, it is necessary to perform an inspection equal to that on a forged product and remove a defect as necessary. As methods of inspecting defects in members, there are radiographic testing (RT) and ultrasonic testing (UT). Since the RT may be performed as a final product inspection, Japanese Industrial Standard JIS G 0581 has been established. Meanwhile, there are no domestic standards for the UT for cast products. Accordingly, in the current situation, the UT is not applicable to a final inspection. There is no particular problem with using the UT for a voluntary inspection, which is an inspection at a stage during manufacturing.

An object of the present disclosure is to facilitate the inspection and repair of a cast steel product or the like at a manufacturing stage and obtain a finished product in a short time.

In order to achieve the above object, in the present disclosure, a manufacturing method of a cast steel product formed by casting and having an internal space, includes: inserting, in a state where a liquid is stored in at least a portion of the internal space, an arm having an ultrasonic probe into the internal space; emitting an ultrasonic wave from the ultrasonic probe toward an inner wall surface of the cast steel product via the liquid and detecting an echo of the ultrasonic wave; and determining presence or absence of a defect in the cast steel product on the basis of the echo.

According to the present disclosure, it is possible to facilitate the inspection and repair of the cast steel product or the like at the manufacturing stage and obtain the finished product in a short time.

BRIEF DESCRIPTION OF THE DRAWINGS:

FIG. 1 is a cross-sectional view illustrating an ultrasonic inspection system in a first embodiment.
FIG. 2 is a cross-sectional view illustrating a shot blasting system in the first embodiment.
FIG. 3 is a configuration diagram illustrating an ultrasonic inspection system in FIG. 1.

FIG. 4 is a configuration diagram illustrating a shot blasting device 30 in FIG. 2.

FIG. 5 is a table showing an effect of improving a surface roughness by the shot blasting.

FIG. 6 is a flow chart illustrating a manufacturing method of a valve box which is a cast steel product according to the first embodiment.

FIG. 7 is a cross-sectional view illustrating an ultrasonic inspection system in a second embodiment.

FIG. 8 is a partially enlarged cross-sectional view illustrating a state where a jig is attached to an ultrasonic probe 3 in FIG. 7.

FIG. 9 is a cross-sectional view illustrating a shot blasting system in the second embodiment.

## DETAILED DESCRIPTION OF THE PREFERRED EMBODIMENTS:

The present disclosure relates to a manufacturing method of a cast steel product, e.g., a container made of cast steel such as a valve casing (valve box). The manufacturing method of the container made of cast steel mentioned herein includes a case where an inspection, processing or the like is performed not only from an outer surface of the container, but also from an inner wall portion thereof.

In addition, the manufacturing method according to the present disclosure is applicable to manufacturing of not only the cast steel product, but also a component formed using a 3D printer. The 3D printer mentioned herein refers to a three-dimensional modeling device capable of forming a component having a complicated shape including a hollow portion (internal space), such as that of a valve box, by a method such as additive manufacturing on the basis of design data of a component having a three-dimensional shape or the like. The component formed by the 3D printer or the like includes those made of metal, resin, and the like. In the present specification, the component formed by the 3D printer or the like is referred to as a "laminated structure". In addition, a modeling technology to be used when the laminated structure is formed is not particularly limited.

The present disclosure includes a manufacturing method of the laminated structure.

Referring to the drawings, a description will be given of embodiments of the present disclosure.

[First Embodiment]

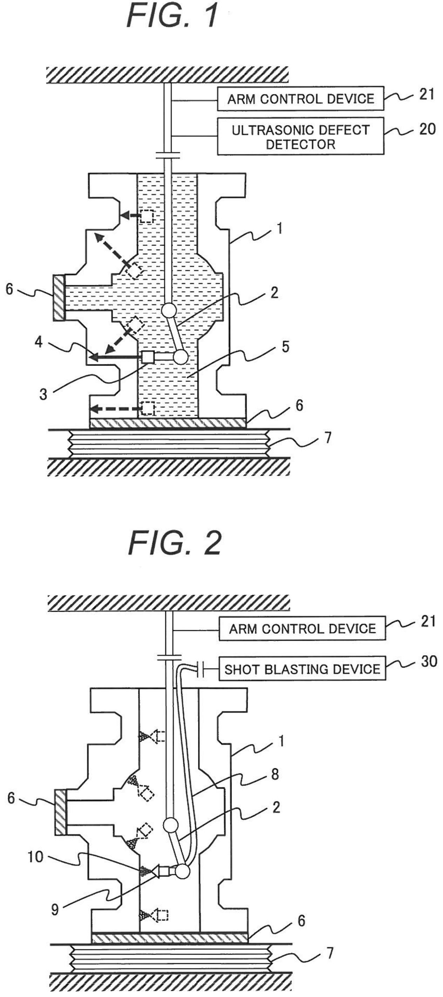

FIG. 1 is a cross-sectional view illustrating an ultrasonic inspection system in the first embodiment.

In the drawing, a valve box 1 is a target object to be subjected to an ultrasonic inspection.

The ultrasonic inspection system includes an arm 2, an ultrasonic probe 3, an ultrasonic defect detector 20, and an arm control device 21.

In the present drawing, the ultrasonic inspection is performed by storing water 5 in a container of the valve box 1. Accordingly, when the present inspection is to be performed, closing lids 6 are set in respective flow path ports (in a lower portion and a left portion of the valve box 1 in the drawing) of the valve box 1. The arm 2 is fixed to a gantry crane or to a ceiling of a building. In addition, the valve box 1 is placed on a hydraulic jack 7 to adjust a height of the valve box 1 during the inspection.

The inspection is performed by emitting an ultrasonic wave 4 from the ultrasonic probe 3 which is fixed to a tip portion of the arm 2 and detecting the echo thereof. The ultrasonic wave 4 is emitted from within the valve box 1 via the water 5 toward an outer surface thereof. Control such as the emission of the ultrasonic wave 4 from the ultrasonic probe 3 and stopping thereof is performed by transmitting a control signal from the ultrasonic defect detector 20. At this time, an angle of the ultrasonic probe 3 is adjusted such that the ultrasonic wave 4 is perpendicularly incident on the inner wall surface of the valve box 1. Broken line arrows indicate a plurality of states of emission performed with the ultrasonic probe 3 being directed perpendicularly to the inner wall surface of the valve box 1. Movement of the ultrasonic probe 3 and adjustment of a direction (angle) thereof is performed with the arm control device 21.

The ultrasonic probe 3 scans so as to inspect the entire inner wall surface of the valve box 1 in a state where a given distance (water distance) is provided from the inner wall surface of the valve box 1. The water distance is provided herein in order to prevent a cast surface of the valve box 1, which is a cast steel product, from rubbing against the ultrasonic probe 3 and causing a failure of the ultrasonic probe 3. An indication of the water distance is 1/4 of a thickness of the valve box 1. A normal to an ultrasonic transmission/reception surface of the ultrasonic probe 3 is controlled to be in the same direction as that of a normal to the inner wall surface of the valve box 1. Thus, the ultrasonic wave 4 can be incident with high intensity on the inside of the valve box 1, can detect a minute defect, and can perform a high-accuracy inspection.

When the cast surface of the valve box 1 is significantly rough, the ultrasonic wave 4 is not incident with sufficient intensity on a wall inner portion of the valve box 1 to be inspected. In this case, by performing a shot blasting on the inner wall surface of the valve box 1, the surface roughness of the inner wall surface is reduced to smooth the surface.

In addition, it is also possible to perform a process such as an ultrasonic inspection without changing a length of the arm 2 by moving the valve box 1 with the hydraulic jack 7 upwardly or downwardly.

FIG. 2 is a cross-sectional view illustrating a shot blasting system in the first embodiment.

In the drawing, the shot blasting system includes the arm 2, a hose 8, a shot nozzle 9, the arm control device 21, and a shot blasting device 30.

As shown in the drawing, the shot blasting is performed without storing water in the internal space of the valve box 1. When the shot blasting is to be performed, the closing lids 6 are set in the flow path ports of the valve box 1. This is intended to prevent shot particles 10 and dust that are ejected during the shot blasting from being scattered.

In the shot blasting, the shot nozzle 9 is fixed to the tip portion of the arm 2. The shot nozzle 9 ejects the high-pressure shot particles 10 supplied from the hose 8. By causing the shot particles 10 to impinge on the inner wall surface of the valve box 1, it is possible to grind the surface, and smooth the surface. When the inner wall surface of the valve box 1 is smoothed, it is possible to perform the ultrasonic inspection in FIG. 1. In addition, an operation of moving the shot nozzle 9 can be performed with the arm 2 and the arm control device 21.

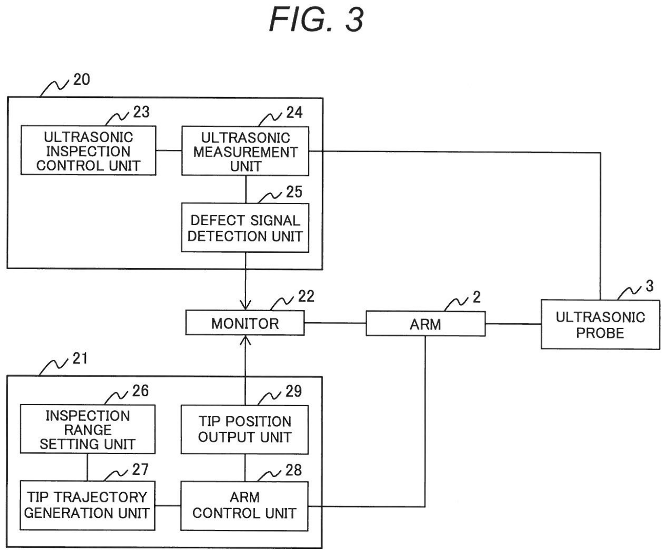

FIG. 3 is a configuration diagram illustrating the ultrasonic inspection system in FIG. 1.

In FIG. 3, the ultrasonic inspection system includes the arm 2, the ultrasonic probe 3, the ultrasonic defect detector 20, the arm control device 21, and a monitor 22.

The ultrasonic defect detector 20 has an ultrasonic inspection control unit 23, an ultrasonic measurement unit 24, and a defect signal detection unit 25. The ultrasonic defect detector 20 is connected to the ultrasonic probe 3 and to the monitor 22.

The ultrasonic inspection control unit 23 formulates an overall plan for the ultrasonic inspection and issues, to the ultrasonic measurement unit 24, control commands to transmit and receive an ultrasonic wave. The ultrasonic measurement unit 24 transmits the ultrasonic wave to the ultrasonic probe 3 and receives a signal from the ultrasonic probe 3 according to the control commands from the ultrasonic inspection control unit 23, and processes the signal. Then, the ultrasonic measurement unit 24 transmits data such as a result of the processing to the defect signal detection unit 25. The defect signal detection unit 25 extracts, according to a threshold of an amplitude of a reception signal received in advance, a defect signal from the reception signal. Information on the presence or absence of a defect is displayed on the monitor 22.

The arm control device 21 has an inspection range setting unit 26, a tip trajectory generation unit 27, an arm control unit 28, and a tip position output unit 29. The arm control device 21 is connected to the arm 2 and to the monitor 22.

The inspection range setting unit 26 produces, on the basis of setting information of an inspection range from within the valve box 1, a scanning range for the ultrasonic probe 3 that covers the entire range. The tip trajectory generation unit 27 produces a scanning trajectory of the tip portion of the arm 2 that implements the scanning range for the ultrasonic probe 3 produced by the inspection range setting unit 26. The arm control unit 28 transmits, according to the scanning trajectory generated by the tip trajectory generation unit 27, a control command associated with the operation of the arm 2 to the arm 2. The arm control unit 28 transmits data on tip coordinates of the arm 2 following the control command to the tip position output unit 29. The tip position output unit 29 outputs the tip coordinates of the arm 2 received from the arm control unit 28 to the monitor 22.

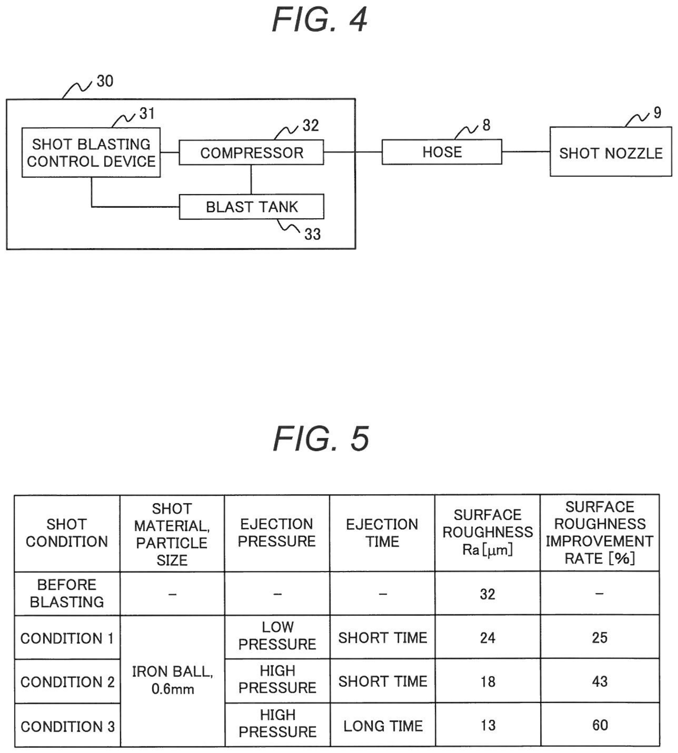

FIG. 4 is a configuration diagram illustrating the shot blasting device 30 in FIG. 2.

In the drawing, the shot blasting device 30 has a shot blasting control device 31, a compressor 32, and a blast tank 33. The compressor 32 is connected to the hose 8. By operating the compressor 32, the shot particles 10 stored in the blast tank 33 are fed out to the shot nozzle 9 via the hose 8.

The shot blasting control device 31 sets a pressure of the compressor 32 and issues a command for a quantity of the shot particles 10 to be supplied to the blast tank 33. The compressor 32 compresses air containing the shot particles 10 sent from the blast tank 33 to a predetermined pressure. The shot particles 10 are sent to the shot nozzle 9 through the hose 8 to be ejected under a high pressure into the valve box 1.

FIG. 5 is a table showing an effect of improving the surface roughness by shot blasting. The improvement effect is examined by actually measuring surface roughness Ra before the shot blasting and after the shot blasting.

This table shows different surface roughness when an ejection pressure and an ejection time were varied for a cast steel material having a cast surface.

The shot blasting was performed using balls made of iron (iron balls) as a shot material. A particle size of each of the iron balls was set to 0.6 mm. The shot blasting was performed by using the ejection pressure and the ejection time as parameters under three conditions. A surface roughness $Ra_{before}$ before the shot blasting was 32 $\mu$m.

A surface roughness improvement rate r (%) was calculated using the following expression.

$$r = \{(Ra_{before}) - (Ra_{after})\} / (Ra_{before}) \times 100$$

(where $Ra_{after}$ represents the surface roughness after shot blasting)

As shown in this table, when a low pressure and a short time under Condition 1 were set, the surface roughness $Ra_{after}$ after the shot blasting was 24 $\mu$m, and the surface roughness improvement rate r was 25%. Alternatively, when a high pressure and a short time under Condition 2 were set, $Ra_{after}$ was 18 $\mu$m, and r was 43%. Still alternatively, when a high pressure and a long time under Condition 3 were set, $Ra_{after}$ was 13 $\mu$m, and r was 60%.

It was confirmed that, by thus increasing the ejection pressure for the shot blasting and elongating the ejection time, the surface roughness Ra was improved.

It is to be noted herein that a purpose of improving the surface roughness is an improvement of inspection performance in the ultrasonic inspection and, as the surface roughness Ra is smaller, a higher-sensitivity inspection is possible, and a defect can reliably be detected. Standards for the ultrasonic inspection require Ra to be about 6.3 $\mu$m or 12.5 um. By performing the shot blasting under appropriate conditions, it is possible to improve the surface roughness to a level required by the standards. Although the surface roughness can also be measured after the shot blasting, it may also be possible to preliminarily determine shot blasting conditions (a shot material, a particle size, an ejection pressure, and an ejection time) required to achieve an objective surface roughness by testing, set the conditions to the shot blasting control device 31, and thereby guarantee the surface roughness.

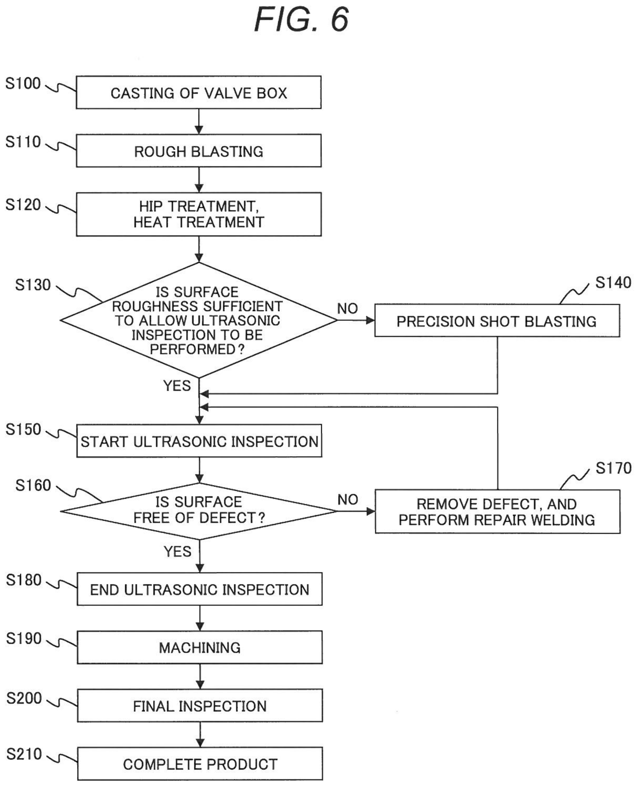

FIG. 6 is a flow chart illustrating a manufacturing method of the valve box, which is the cast steel product according to the present embodiment.

In the drawing, first, in Step S100, casting of the valve box is performed. A mold in accordance with a product shape and dimensions is fabricated, and a molten metal obtained by melting a material is poured therein and solidified by cooling to produce the valve box made of cast steel. Then, rough blasting in Step S110 is performed. The valve box from which the mold has been removed is in a state where the surface roughness is high due to a remaining mold material, such as sand, adhering thereto, remaining unevenness of a sand mold, and the like. The rough blasting refers to removing these by rough shot blasting. In a typical cast steel product, there are no particular requirements for surface roughness related to surface finishing.

There is a case where, to enhance a strength of a member, an HIP treatment and a heat treatment in Step S120 are performed. The HIP is the abbreviation of the hot isostatic pressing, which is a processing method that performs a pressing on a high-temperature/high-pressure material and thereby cushes a defect that occurred inside a cast product. The HIP is performed with a dedicated furnace-type device to remove a minute defect that occurred during casting. Meanwhile, the heat treatment of the material is a technique of transforming a crystalline structure of the material and improving a strength of the material. By the two processing steps, the material strength is improved, and even a cast steel product is allowed to have a high strength.

In Step S130, it is determined whether or not the surface roughness is sufficient to allow the ultrasonic inspection to be performed. The determination is made by using a signal intensity of a reflected wave from an outer surface in the ultrasonic inspection. When the signal intensity of the reflected wave is equal to or less than a predetermined value, under the influence of the surface roughness, the intensity of the ultrasonic signal emitted into the member decreases, and the defect detection in the ultrasonic wave inspection may not be able to be correctly performed. Accordingly, by using the magnitude of the signal intensity, the surface roughness is determined.

In Step S130, when the surface is smooth and "Yes" is given, the process flow shifts to the ultrasonic inspection in Step S150. Meanwhile, when the surface is rough and "No" is given, precision shot blasting that controls blasting conditions is performed in Step S140.

The precision shot blasting in Step S140 is performed under the conditions shown in the table of FIG. 5. As the conditions for the precision shot blasting, the set conditions are transmitted to the shot blasting control device 31 in FIG. 4, and the shot blasting system illustrated in FIG. 2 is operated on the basis of the conditions. In addition, the shot blasting control device 31 sets conditions for achieving a roughness level that has been confirmed in advance to enable defects that are unacceptable under design requirements to be detected in the ultrasonic inspection. Thus, the surface roughness of the inner wall surface of the valve box, which is a surface to be inspected, is made to smooth. After the precision shot blasting, the process flow advances to the ultrasonic inspection in Step S150.

The ultrasonic inspection in Step S150 is performed using the ultrasonic inspection system illustrated in FIG. 1 according to a predetermined operation method. The closing lids 6 are set in the flow path ports of the valve box 1, and water is stored in the internal space of the valve box 1. Then, into the internal space of the valve box 1, the arm 2 is inserted. To the tip portion of the arm, the ultrasonic probe 3 is attached and, by outwardly emitting the ultrasonic wave 4 from the inner wall surface of the valve box 1 and detecting the echo thereof, the presence or absence of a defect is inspected.

In Step S160, it is determined whether or not the surface is free of defects. When it is determined that the surface is free of defects by the defect signal detection unit 25, i.e., when "Yes" is given, the ultrasonic inspection is ended (Step S180). By contrast, when it is determined that the surface is not free of defects by the defect signal detection unit 25, i.e., when "No" is given, the inspection is not passed, and therefore the defect is removed in Step S170, and a repair welding is performed. When there is a defect, coordinate information of the arm tip position of the tip position output unit 29 is displayed together with the defect signal. On the basis of the displayed coordinates, a repair range is determined, the inner wall surface of the valve box 1 is drilled, and the defect is removed. After the removal of the defect, the inner wall surface is filled again by welding to be restored to an original state. After the inner wall surface previously having the defect is filled again, the ultrasonic inspection in Step S150 is performed, and the determination in Step S160 is performed again. The defect mentioned herein refers to a scar in the surface of the constituent member of the valve box 1, an internal void in the constituent member, or the like.

After the ultrasonic inspection is ended (Step S180), a machining in Step S190 is performed. In this case, using a machining device such as a milling machine, a shape forming is performed so as to reach dimensions exactly as specified in design drawings. In this state, the removal of the defect from the valve box 1 has been confirmed by the ultrasonic inspection, and accordingly a final machining is performed. When the machining is ended, a final inspection in Step S200 is performed. The final inspection is performed by a method required by the standards or the like, but is normally performed by a radiographic testing. It is confirmed that the defect has been removed by the ultrasonic inspection described above.

Upon passing the final inspection, the product is assumed to be completed (Step S210)

The effects achieved by the present embodiment are as follows.

In the present embodiment, the valve box 1 is a container and therefore, by attaching the closing lids 6 to flow path ends, it is possible to store water, and perform the ultrasonic inspection by using the valve box 1 as a water tank. In other words, by inserting the ultrasonic probe 3 which is supported by the arm 2 into the water tank and performing the inspection, it is possible to determine the presence or absence of a defect in the valve box 1. When a defect is detected at this stage, the defect is repaired by drilling a portion where the defect was detected and removing the defect. Compared to the case where a defect is detected in the RT of the final inspection, this allows easy preparation of repair work and can minimize the impact on the manufacturing time. In addition, by performing the ultrasonic inspection by using the valve box 1 as the water tank, it is possible to reduce an amount of water used in the ultrasonic inspection.

Moreover, regarding the surface roughness, which is one of the reasons why the ultrasonic inspection is difficult to apply to the cast steel product, it is possible to obtain a smooth surface by appropriately setting the conditions for the shot blasting. Since the shot blasting can also be performed on the inner wall surface of the valve box 1, such large-scale cutting as performed on a forged product is no longer required, thereby improving work efficiency.

According to the present embodiment, by adding the step of the ultrasonic inspection and the step of the shot blasting to the steps of manufacturing the cast steel product, it is possible to efficiently remove the defect and increase the reliability of the cast steel product.

[Second Embodiment]

The second embodiment is an example of a case where, instead of the arm, a person holds the shot nozzle and the ultrasonic probe by hand, to scan the inner wall surface of the valve box.

The following will describe only points different from those in the first embodiment.

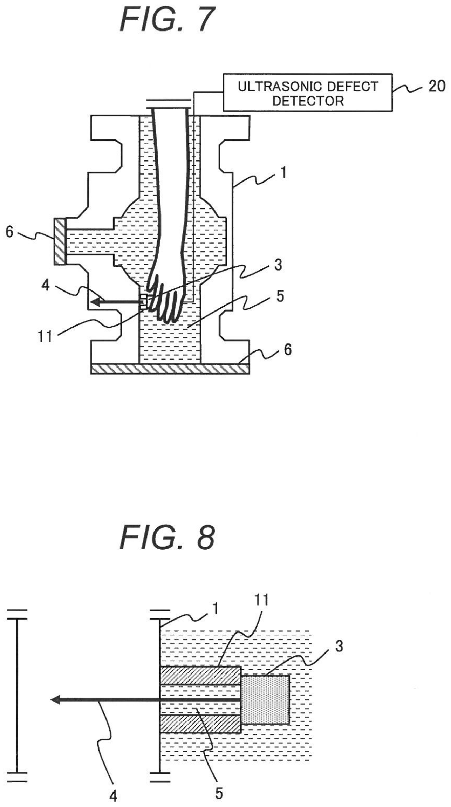

FIG. 7 is a cross-sectional view illustrating an ultrasonic inspection system in the second embodiment.

In the present drawing, unlike in FIG. 1, the ultrasonic probe 3 is held by hand, instead of the arm, and the person inserts his/her arm into the valve box 1 to operate the ultrasonic probe 3. The device configuration is otherwise the same as in FIG. 1.

At that time, a protector such as a thick rubber glove with an arm cover is worn to avoid injury. During defect detection, coordinates cannot be recorded, but an approximate inspection position can be checked. In addition, repair is performed after draining water.

The ultrasonic inspection is performed by storing the water 5 in the internal space of the valve box 1. Accordingly, when the present inspection is to be performed, the closing lids 6 are set in the flow path ports of the valve box 1. The ultrasonic wave 4 is applied to the inner wall surface of the valve box 1 via the water 5. Control such as the emission of the ultrasonic wave 4 from the ultrasonic probe 3 and stopping thereof is performed by transmitting a control signal from the ultrasonic defect detector 20. At this time, an angle of the ultrasonic probe 3 is adjusted such that the ultrasonic wave 4 is perpendicularly incident on the inner wall surface of the valve box 1.

The ultrasonic probe 3 scans so as to inspect the entire inner wall surface of the valve box 1 in a state where a given distance (water distance) is provided from the inner wall surface of the valve box 1.

In the present embodiment, the movement of the ultrasonic probe 3 and the stopping thereof is manually performed, and accordingly it is difficult to maintain the water distance constant. Therefore, in the present embodiment, a jig is provided between the ultrasonic probe 3 and the inner wall surface of the valve box 1.

FIG. 8 is a partially enlarged cross-sectional view illustrating a state where the jig is attached to the ultrasonic probe 3 in FIG. 7.

As illustrating in the drawing, to the tip portion of the ultrasonic probe 3, a wedge 11 serving as the jig is attached. In addition, the wedge 11 is brought into contact with the inner wall surface of the valve box 1. As a result, a scanning with the ultrasonic probe 3 is performed in a state where the wedge 11 is in contact. This allows the ultrasonic probe 3 to maintain the water distance with respect to the inner wall surface of the valve box 1.

In addition, the wedge 11 has a cylindrical shape and has an internal space (cavity). Consequently, during the ultrasonic inspection, the internal space of the wedge 11 is filled with water 5 to result in a state where the water 5 is in contact with the tip portion of the ultrasonic probe 3 and with the inner wall surface of the valve box 1. The ultrasonic wave 4 is emitted toward the valve box 1 via the water 5. This allows the ultrasonic wave 4 to be incident with high intensity on the inner wall surface of the valve box 1, and can increase the accuracy of the inspection.

In addition,, when the arm 2 (FIG. 1) is used as in the first embodiment, the water distance from the inner wall surface of the valve box 1 is controlled with the arm 2, and therefore the wedge 11 shown in FIG. 8 need not be used.

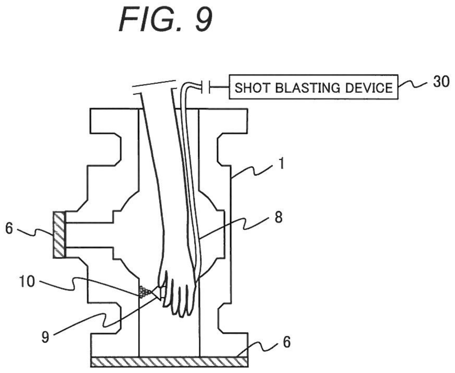

FIG. 9 is a cross-sectional view illustrating a shot blasting system in the second embodiment.

The drawing illustrates a configuration of the shot blasting system when an operation is performed by human hand without using the arm.

As shown in the drawing, the shot blasting is performed without storing water in the internal space of the valve box 1. When the shot blasting is to be performed, the closing lids 6 are set in the flow path ports of the valve box 1. This is intended to prevent shot particles 10 that are ejected during the shot blasting and dust from being scattered.

The shot nozzle 9 is held by hand, and an arm is inserted into the valve box 1 to operate the shot nozzle 9. At this time, a protector such as a thick rubber glove with an arm cover is worn to avoid injury of a hand due to the shot particles 10. After shot blasting is ended, an internal observation is performed to ensure that no surface smoothing treatment is missed. The shot nozzle 9 ejects the high-pressure shot particles 10 supplied from the hose 8. By causing the shot particles 10 to impinge on the inner wall surface of the valve box 1, the surface is ground, and the surface roughness can be smoothed. When the surface is smoothed, the ultrasonic inspection in FIG. 7 can be performed.

Thus, even when no arm is used, it is possible to perform the ultrasonic inspection from the inner wall surface of the valve box 1 and obtain the same effects as obtained in the first embodiment.

In each of the foregoing embodiments, after the closing lids 6 are attached to the flow path ends of the valve box 1, water is stored in the internal space of the valve box 1, and then the ultrasonic inspection is performed, but the manufacturing method of the present disclosure is not limited thereto. It may also be possible to store water in a water tank capable of containing the entire valve box 1 and perform the ultrasonic inspection in a state in which the entire valve box 1 is immersed in the water tank.

In addition, in each of the embodiments described above, the ultrasonic inspection is performed using water, but it may also be possible to use oil or the like instead of water.

REFERENCE SIGNS LIST:

| | |
|---|---|
| 1 | Valve box |
| 2 | Arm |
| 3 | Ultrasonic probe |
| 4 | Ultrasonic wave |
| 5 | Water |
| 6 | Closing lid |
| 7 | Hydraulic jack |
| 8 | Hose |
| 9 | Shot nozzle |
| 10 | Shot particles |
| 11 | Wedge |
| 20 | Ultrasonic defect detector |
| 21 | Arm control device |
| 22 | Monitor |
| 23 | Ultrasonic inspection control unit |
| 24 | Ultrasonic measurement unit |
| 25 | Defect signal detection unit |
| 26 | Inspection range setting unit |
| 27 | Tip trajectory generation unit |
| 28 | Arm control unit |
| 29 | Tip position output unit |
| 30 | Shot blasting device |
| 31 | Shot blasting control device |
| 32 | Compressor |
| 33 | Blast tank |

**Claims**

**1.** A manufacturing method of a cast steel product formed by casting and having an internal space, the manufacturing method comprising the steps of:

inserting an arm having an ultrasonic probe into the internal space in a state where a liquid is stored in at least a portion of the internal space;

emitting an ultrasonic wave from the ultrasonic probe toward an inner wall surface of the cast steel product via the liquid and detecting an echo of the ultrasonic wave; and

determining presence or absence of a defect in the cast steel product on the basis of the echo.

2. The manufacturing method of the cast steel product according to claim 1, wherein

before an inspection using the emission of the ultrasonic wave is performed,

the arm with a shot nozzle attached is inserted into the internal space, and

shot particles are ejected from the shot nozzle toward the inner wall surface of the cast steel product to allow the inner wall surface to have a surface roughness sufficient to allow the inspection to be performed.

3. The manufacturing method of the cast steel product according to claim 2, wherein before a shot blasting using the ejection of the shot particles, a treatment using a hot isostatic pressing and a heat treatment is performed on the cast steel product.

4. The manufacturing method of the cast steel product according to claim 1, wherein before an inspection using the emission of the ultrasonic wave is performed, a treatment using a hot isostatic pressing and a heat treatment is performed on the cast steel product.

5. A manufacturing method of a cast steel product formed by casting and having an internal space, the manufacturing method comprising the steps of:

causing a person to hold an ultrasonic probe by hand and insert the ultrasonic probe into the internal space in a state where a liquid is stored in at least a portion of the internal space;

emitting an ultrasonic wave from the ultrasonic probe toward an inner wall surface of the cast steel product via the liquid and detecting an echo of the ultrasonic wave; and

determining presence or absence of a detect in the cast steel product on the basis of the echo.

6. The manufacturing method of the cast steel product according to claim 5, wherein

before an inspection using the emission of the ultrasonic wave is performed,

the person holds a shot nozzle by hand and inserts the shot nozzle into the internal space, and

shot particles are ejected from the shot nozzle toward the inner wall surface of the cast steel product to allow the inner wall surface to have a surface roughness sufficient to allow the inspection to be performed.

7. The manufacturing method of the cast steel product according to claim 2 or 6, wherein it is determined whether or not the surface roughness is sufficient to allow the inspection to be performed and, when it is determined that the inspection is not possible, a precision shot blasting is performed under a predetermined condition before the inspection.

8. The manufacturing method of the cast steel product according to claim 7, wherein

the predetermined condition includes a condition for at least one of a shot material, a particle size, an ejection pressure, and an ejection time, and

the predetermined condition is determined in advance by a testing so as to correspond to a target value of the surface roughness.

9. The manufacturing method of the cast steel product according to claim 1 or 5, wherein the cast steel product is a valve box for an isolation valve in a nuclear power plant.

10. The manufacturing method of the cast steel product according to claim 9, wherein the inspection using the emission of the ultrasonic wave is performed by attaching a closing lid to a flow path end of the valve box, and then storing the liquid in the internal space of the valve box.

11. The manufacturing method of the cast steel product according to claim 1 or 5, wherein the liquid is water.

12. A manufacturing method of a laminated structure formed by using a three-dimensional modeling device and having an internal space, the manufacturing method comprising the steps of:

inserting an arm having an ultrasonic probe into the internal space in a state where a liquid is stored in at least a portion of the internal space;
emitting an ultrasonic wave from the ultrasonic probe toward an inner wall surface of the laminated structure via the liquid and detecting an echo of the ultrasonic wave; and
determining presence or absence of a defect in the laminated structure on the basis of the echo.

13. The manufacturing method of the laminated structure according to claim 12, wherein

before the inspection using the emission of the ultrasonic wave is performed,
the arm with a shot nozzle attached is inserted into the internal space, and
shot particles are ejected from the shot nozzle toward the inner wall surface of the laminated structure to allow the inner wall surface to have a surface roughness sufficient to allow the inspection to be performed.

14. A manufacturing method of a laminated structure formed by using a three-dimensional modeling device and having an internal space, the manufacturing method comprising the steps of:

causing a person to hold an ultrasonic probe by hand and insert the ultrasonic probe into the internal space in a state where a liquid is stored in at least a portion of the internal space;
emitting an ultrasonic wave from the ultrasonic probe toward an inner wall surface of the laminated structure via the liquid and detecting an echo of the ultrasonic wave; and
determining presence or absence of a defect in the laminated structure on the basis of the echo.

15. The manufacturing method of the laminated structure according to claim 14, wherein

before an inspection using the emission of the ultrasonic wave is performed,
the person holds a shot nozzle by hand and inserts the shot nozzle into the internal space, and
shot particles are ejected from the shot nozzle toward the inner wall surface of the laminated structure to allow the inner wall surface to have a surface roughness sufficient to allow the inspection to be performed.

# FIG. 1

ARM CONTROL DEVICE — 21

ULTRASONIC DEFECT DETECTOR — 20

# FIG. 2

ARM CONTROL DEVICE — 21

SHOT BLASTING DEVICE — 30

## FIG. 3

## FIG. 4

```
┌─────────────────────────────────────────────────────────┐
│ 30                                                        │
│   31                      32                              │
│  ┌──────────────────┐   ┌──────────────┐                 │
│  │ SHOT BLASTING    │───│ COMPRESSOR   │                 │
│  │ CONTROL DEVICE   │   └──────────────┘                 │
│  └──────────────────┘                                    │
│           │             ┌──────────────┐                 │
│           └─────────────│ BLAST TANK   │                 │
│                         └──────────────┘                 │
│                              33                          │
└─────────────────────────────────────────────────────────┘

    8                    9
┌──────────┐      ┌──────────────┐
│  HOSE    │──────│ SHOT NOZZLE  │
└──────────┘      └──────────────┘
```

## FIG. 5

| SHOT CONDITION | SHOT MATERIAL, PARTICLE SIZE | EJECTION PRESSURE | EJECTION TIME | SURFACE ROUGHNESS Ra [μm] | SURFACE ROUGHNESS IMPROVEMENT RATE [%] |
|---|---|---|---|---|---|
| BEFORE BLASTING | – | – | – | 32 | – |
| CONDITION 1 | IRON BALL, 0.6mm | LOW PRESSURE | SHORT TIME | 24 | 25 |
| CONDITION 2 | | HIGH PRESSURE | SHORT TIME | 18 | 43 |
| CONDITION 3 | | HIGH PRESSURE | LONG TIME | 13 | 60 |

12

## FIG. 6

S100 — CASTING OF VALVE BOX

S110 — ROUGH BLASTING

S120 — HIP TREATMENT, HEAT TREATMENT

S130 — IS SURFACE ROUGHNESS SUFFICIENT TO ALLOW ULTRASONIC INSPECTION TO BE PERFORMED?

NO → S140 — PRECISION SHOT BLASTING

YES

S150 — START ULTRASONIC INSPECTION

S160 — IS SURFACE FREE OF DEFECT?

NO → S170 — REMOVE DEFECT, AND PERFORM REPAIR WELDING

YES

S180 — END ULTRASONIC INSPECTION

S190 — MACHINING

S200 — FINAL INSPECTION

S210 — COMPLETE PRODUCT

## FIG. 7

ULTRASONIC DEFECT DETECTOR ~ 20

## FIG. 8

# FIG. 9

Europäisches
Patentamt

European
Patent Office

Office européen
des brevets

# EUROPEAN SEARCH REPORT

**Application Number**

EP 25 22 0085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 226707 A (SUMITOMO METAL IND; SUMIKIN KASHIMA SOGO SERVICE K ET AL.) 21 August 2001 (2001-08-21) * paragraphs [0022], [0026], [0030], [0034], [0036], [0038], [0045]; claims 1,2; figures 1-8 * | 1-15 | INV. B33Y10/00 B33Y80/00 G01N29/04 G01N29/11 G01N29/265 |
| X | EP 1 038 175 B1 (SEV TRENT WATER LTD [GB]; THAMES WATER UTILITIES [GB] ET AL.) 31 August 2005 (2005-08-31) * paragraphs [0015], [0016], [0019], [0022], [0024], [0025], [0032]; claim 1; figures 2,4,6 * | 1-15 | |
| X | DE 101 39 130 B4 (KARLSRUHE FORSCHZENT [DE]) 25 May 2005 (2005-05-25) * paragraphs [0007], [0013]; claim 1; figure 2 * | 1-15 | |

|  |
|---|
| TECHNICAL FIELDS SEARCHED (IPC) |
| B33Y G01N B22D |

The present search report has been drawn up for all claims

| Place of search | Date of completion of the search | Examiner |
|---|---|---|
| The Hague | 17 April 2026 | Momeni, Mohammad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0085

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2026

| Patent document cited in search report | | Publication date | Patent family member(s) | | Publication date |
|---|---|---|---|---|---|
| JP 2001226707 | A | 21-08-2001 | JP | 4733256 B2 | 27-07-2011 |
| | | | JP | 2001226707 A | 21-08-2001 |
| EP 1038175 | B1 | 31-08-2005 | AT | E303595 T1 | 15-09-2005 |
| | | | AU | 735710 B2 | 12-07-2001 |
| | | | CA | 2312394 A1 | 24-06-1999 |
| | | | DE | 69831423 T2 | 06-07-2006 |
| | | | EP | 1038175 A1 | 27-09-2000 |
| | | | ES | 2247730 T3 | 01-03-2006 |
| | | | GB | 2332274 A | 16-06-1999 |
| | | | US | 6474165 B1 | 05-11-2002 |
| | | | WO | 9931499 A1 | 24-06-1999 |
| DE 10139130 | B4 | 25-05-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004144489 A

- JP 2009066656 A